# EUROPEAN PATENT APPLICATION

(11) **EP 4 811 623 A1**
(43) Date of publication of application: **23.09.2026**
(21) Application number: 24953908.1
(22) Date of filing: 24.10.2024
(51) Int. Cl.: H02K 9/22, H02K 9/19, H02K 9/16, H02K 16/02, H02K 21/24

(54) **AXIAL TYPE MOTOR INCLUDING COOLING PLATE**

(30) Priority: 09.09.2024 KR 20240122438
(71) Applicant: Eflow Co., Ltd., Changwon-si, Gyeongsangnam-do 51541 (KR)
(72) Inventor: YOUN, Su Han, Haman-gun Gyeongsangnam-do 52043 (KR); CHOI, Seung Ho, Changwon-si Gyeongsangnam-do 51288 (KR)
(74) Representative: BCKIP Part mbB
(86) International application number: PCT/KR2024/016240
(87) International publication number: WO 2026/054164

(57) **Abstract**

An axial flux motor includes a motor housing defining an internal space, a shaft rotatably provided in the internal space, a stator disposed to be fixed to the motor housing in the internal space and including a stator core, a coil, and a stator bracket, a rotor fixedly coupled to the shaft and disposed to face the stator in an axial direction and including a rotor base plate and a plurality of permanent magnets, a cooling tube arranged along a circumference of the stator to cool the stator, and a cooling plate provided between the coil and the cooling tube to disperse heat from the coil to the cooling tube.

## Description

### TECHNICAL FIELD

The present invention relates to an axial flux motor including a cooling plate, and more particularly, to an axial flux motor including a cooling plate capable of improving cooling performance of a stator.

### BACKGROUND ART

Recently, as the number of vehicles has increased and operation of personal vehicles has become difficult, the number of people using public transportation or movable small mobility devices has been increasing.

As representative examples of such small mobility devices, electric bicycles, electric kickboards, and electric mini-bikes are used, and among these, demand for electric bicycles has been increasing.

Such a small mobility device is equipped with an axial-type motor capable of reducing a length in an axial direction, and has a structure in which wheels are rotated by rotational force of the motor.

Describing a structure of a general axial flux motor, the axial flux motor is a motor in which a flow of magnetic flux is formed in an axial direction. Since the axial flux motor has a high power density and has a motor diameter that is large relative to an axial length so that a relatively large number of poles can be designed, the axial flux motor has a structure suitable for high-frequency or low-speed driving.

Such an axial flux motor also includes a stator that forms a magnetic field and a rotor that is rotatable with respect to the stator.

The stator includes a plurality of cores that are arranged at regular intervals along a circumferential direction and that protrude to a predetermined height in the axial direction, and the cores are coupled in the axial direction to grooves formed in a stator bracket.

In this case, a coil of the stator is made of a conductor such as copper or aluminum, and when a current passes through the conductor, heat is generated due to resistance of the conductor.

Accordingly, after the motor is operated and the rotor operates, high heat is easily accumulated in the motor housing, and since a cooling structure for rapidly dissipating the high heat generated by the operation of the motor is not provided, the magnetic force of the magnets is attenuated due to the high heat accumulated inside the motor, so that the operating efficiency of the motor is gradually lowered.

In order to prevent such a problem, a cooling blade fan is generally mounted at one end of a central rotation shaft of the motor to suppress a temperature rise of the motor.

However, in such a technique, a forward airflow of the cooling blade fan merely brushes against an outer surface of the housing of the motor and substantially cannot allow the forward airflow to directly enter the inside of the housing, so that the inside of the motor cannot be cooled rapidly and effectively.

Under this background, the present inventor intends to develop an axial flux motor that performs cooling inside the motor housing to prevent heat from being accumulated.

### SUMMARY OF THE INVENTION

### TECHNICAL PROBLEM

The present invention has been made to solve the above-described problems, and an object of the present invention is to provide an axial flux motor including a cooling plate, in which a cooling tube is provided inside a motor housing to cool a stator.

The objects of the present invention are not limited to the object mentioned above, and other objects not mentioned will be clearly understood by those skilled in the art from the following description.

### TECHNICAL SOLUTION

An axial flux motor including a cooling plate according to an embodiment of the present invention may include: a motor housing defining an internal space; a shaft rotatably provided in the internal space; a stator disposed to be fixed to the motor housing in the internal space and including a stator core, a coil, and a stator bracket; a rotor fixedly coupled to the shaft and disposed to face the stator in an axial direction and including a rotor base plate and a plurality of permanent magnets; a cooling tube arranged along a circumference of the stator to cool the stator; and a cooling plate provided between the coil and the cooling tube to disperse heat from the coil to the cooling tube.

Further, the cooling tube may be provided to be wound a plurality of times along a circumferential direction of the stator.

Further, in a wound state, adjacent portions of the cooling tube may be arranged to be spaced apart from each other.

Further, the cooling plate may be formed to surround the stator along a circumferential direction of the stator.

Further, the cooling tube may be formed to have a cross-section of a truncated circle having a chord, and a flat surface defined by the chord may be arranged to contact the cooling plate.

Further, the cooling tube may be formed in a semicircular shape having one side open, and the open side of the cooling tube may be coupled to the cooling plate such that an interior space through which a coolant flows is formed.

Further, the cooling plate may have, in a surface contacting the cooling tube, a cooling tube insertion groove corresponding to an outer shape of the cooling tube.

An axial flux motor including a cooling plate according to another embodiment of the present invention may include: a motor housing defining an internal space; a shaft rotatably provided in the internal space; a stator disposed to be fixed to the motor housing in the internal space and including a stator core, a coil, and a stator bracket; a rotor fixedly coupled to the shaft and disposed to face the stator in an axial direction and including a rotor base plate and a plurality of permanent magnets; a cooling tube wound along a circumferential direction of the stator to cool the stator; and a cooling plate having an interior space formed therein to accommodate the cooling tube and provided such that one surface thereof contacts the stator to disperse heat.

### ADVANTAGEOUS EFFECTS

According to the axial flux motor including a cooling plate of an embodiment of the present invention, the cooling tube contacts the stator to directly cool the stator, thereby improving cooling efficiency of the motor.

The effects of the present invention are not limited to the effects described above, and effects not mentioned will be clearly understood by those skilled in the art to which the present invention belongs from this specification and the accompanying drawings.

### BRIEF DESCRIPTION OF DRAWINGS

FIG. 1 is a perspective view of an axial flux motor including a cooling plate according to an embodiment of the present invention.
FIG. 2 is an exploded perspective view of an axial flux motor including a cooling plate according to an embodiment of the present invention.
FIG. 3 is an exploded perspective view of a stator and a cooling module of FIG. 1.
FIG. 4 is an exploded perspective view of a rotor of FIG. 1.
FIG. 5 is a front view of a stator and a cooling module of FIG. 1.
FIG. 6 is a cross-sectional view of a stator and a cooling module according to an embodiment of the present invention.
FIG. 7 is a cross-sectional view of a stator and a cooling module according to another embodiment of the present invention.
FIG. 8 is a cross-sectional view of a stator and a cooling module according to another embodiment of the present invention.
FIG. 9 is a cross-sectional view of a stator and a cooling module according to another embodiment of the present invention.
FIG. 10 is a cross-sectional view of a stator and a cooling module according to another embodiment of the present invention.
FIG. 11 is a cross-sectional view of a stator and a cooling module according to another embodiment of the present invention.
FIG. 12 is a cross-sectional view of a stator and a cooling module according to another embodiment of the present invention.

### DETAILED DESCRIPTION

The embodiments described in this specification and the configurations illustrated in the drawings are merely preferred examples of the disclosed invention, and there may be various modifications that can replace the embodiments and drawings of this specification at the time of filing of the present application.

The same reference numerals or signs presented in each drawing of this specification denote parts or components that perform substantially the same functions. In the drawings, the shapes and sizes of elements may be exaggerated for clarity of description.

The terms used in this specification are used to describe the embodiments and are not intended to restrict and/or limit the disclosed invention. A singular expression includes a plural expression unless the context clearly indicates otherwise. In this specification, terms such as "comprise" or "have" are intended to designate the presence of features, numbers, steps, operations, components, parts, or combinations thereof described in the specification, and do not preclude in advance the presence or possibility of adding one or more other features, numbers, steps, operations, components, parts, or combinations thereof.

Terms including ordinals such as "first" and "second" used in this specification may be used to describe various components, but the components are not limited by the terms, and the terms are used only for the purpose of distinguishing one component from another component. For example, without departing from the scope of the present invention, a first component may be referred to as a second component, and similarly, a second component may be referred to as a first component.

Hereinafter, an axial flux motor including a cooling plate according to an embodiment of the present invention will be described in detail with reference to the drawings.

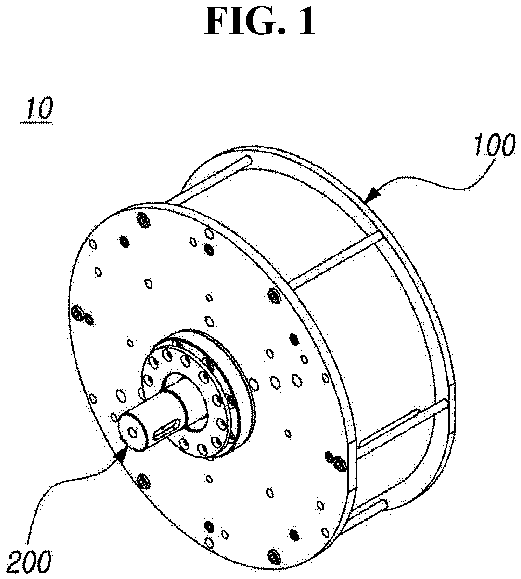

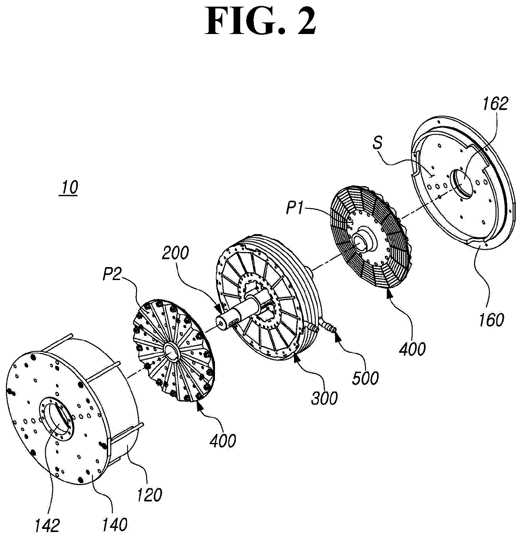

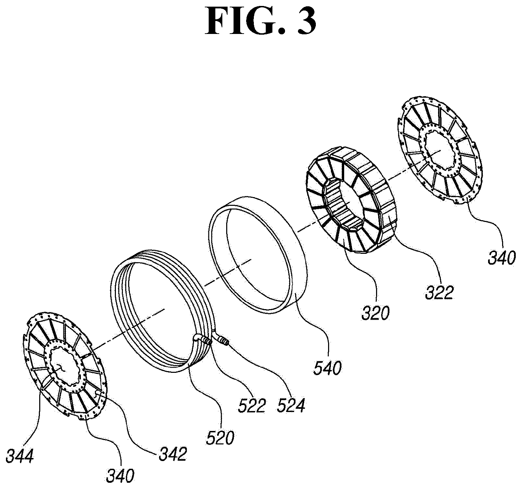

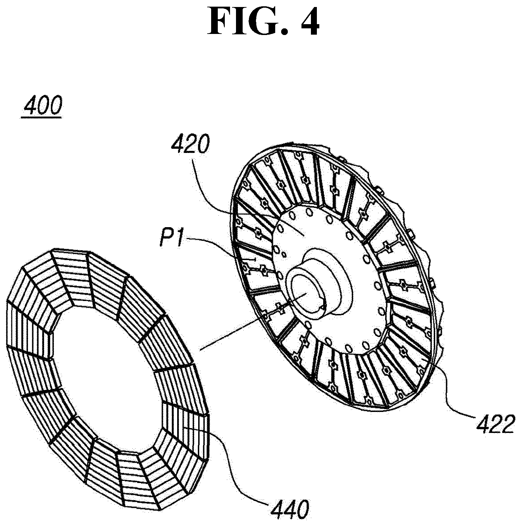

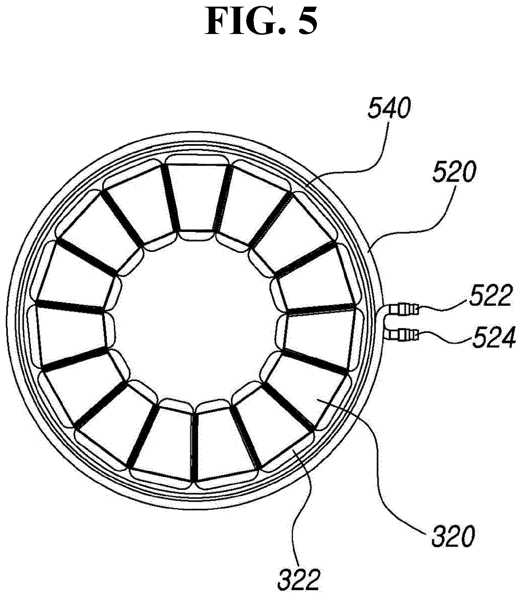

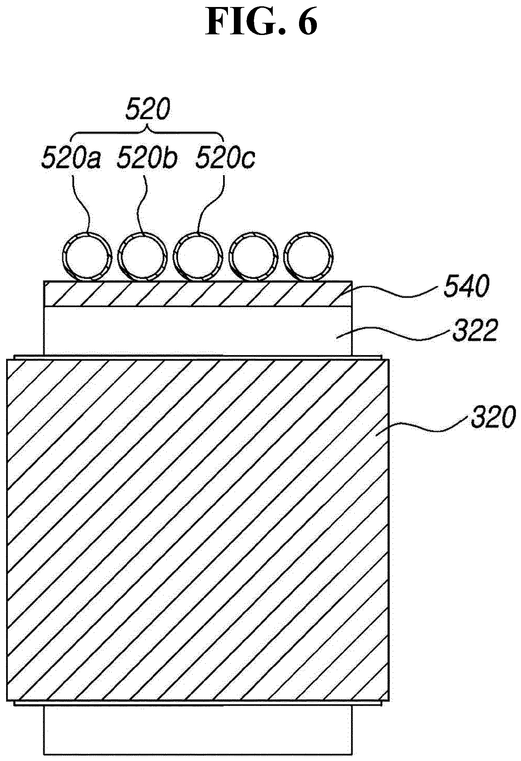

FIG. 1 is a perspective view of an axial flux motor including a cooling plate according to an embodiment of the present invention. FIG. 2 is an exploded perspective view of an axial flux motor including a cooling plate according to an embodiment of the present invention. FIG. 3 is an exploded perspective view of a stator and a cooling module of FIG. 1. FIG. 4 is an exploded perspective view of a rotor of FIG. 1. FIG. 5 is a front view of a stator and a cooling module of FIG. 1. FIG. 6 is a cross-sectional view of a stator and a cooling module according to an embodiment of the present invention.

Referring to FIGS. 1 to 6, the axial flux motor 10 including a cooling plate includes a motor housing 100, a shaft 200, a stator 300, a rotor 400, and a cooling module 500.

The motor housing 100 has an internal space S formed therein, in which the shaft 200, the stator 300, the rotor 400, and the cooling module 500 are provided. The motor housing 100 accommodates the stator 300, the rotor 400, and the cooling module 500 therein. The motor housing 100 may include a housing 120, a front cover 140, and a rear cover 160.

The housing 120 has a cylindrical shape with a hollow formed therein. The housing 120 is coupled to the front cover 140 and the rear cover 160 to define the internal space S.

The front cover 140 and the rear cover 160 may be implemented in a circular plate shape. The front cover 140 and the rear cover 160 are coupled to both sides of an opening formed in the housing 120 to define the internal space S. The front cover 140 and the rear cover 160 are formed with through-holes 142 and 162, respectively, through which the shaft 200 passes in the axial direction.

The shaft 200 is rotatably provided in the internal space S. The shaft 200 may be coupled to the motor housing 100 by a plurality of bearings (not shown).

The stator 300 is disposed in the internal space S of the motor housing 100. The stator 300 may be fixed to the motor housing 100. An outer side of the stator 300 may be formed in a shape corresponding to an inner side of the motor housing 100. The stator 300 includes a stator core 320, a coil 322, and a stator bracket 340.

A plurality of stator cores 320 may be provided. The stator cores 320 may each have the same shape. The stator cores 320 may be arranged to be spaced apart at regular intervals along a circumferential direction from a center.

The coil 322 is disposed on the stator core 320. The coil 322 may be wound on the stator core 320. Specifically, the coil 322 may be wound on an outer surface of each stator core 320 so as to generate magnetic flux in the axial direction. Accordingly, when power is applied to the coil 322 and an alternating current flows therethrough, the permanent magnets 440 of the rotor 400 are rotated by a magnetic field generated thereby.

The stator bracket 340 fixes the stator core 320. The stator bracket 340 may be formed of an insulator so that the respective stator cores 320 and coils 322 are not electrically connected to each other. For example, the stator bracket 340 may be formed of ceramic, Bakelite which is a thermosetting resin, or coated stainless steel.

The stator bracket 340 may be formed with guide holes 342 into which end portions of the stator cores 320 are inserted and fixed. The guide holes 342 may guide the stator cores 320 to be inserted in the axial direction. The guide holes 342 may be formed in a number corresponding to the stator cores 320. Specifically, the guide holes 342 may be arranged to be spaced apart at regular intervals along the circumferential direction from the center so as to correspond to the stator cores 320.

The stator brackets 340 may be provided as a pair to fix the stator cores 320 from both sides. The stator bracket 340 may be formed with a hollow 344 at a central portion thereof, through which the shaft 200 passes in the axial direction.

The rotor 400 is provided in the internal space S of the housing 120. The rotor 400 is fixedly coupled to the shaft 200. The rotor 400 is disposed on one side of the stator 300. The rotor 400 is disposed to face the stator 300 along the axial direction. When power is supplied to the stator 300, the rotor 400 interacts with the stator 300 to rotate. The rotor 400 includes a rotor base plate 420 and permanent magnets 440.

The rotor base plate 420 is disposed to face the stator 300. Specifically, the rotor base plate 420 may be disposed to face the stator bracket 340.

The rotor base plate 420 is formed with permanent magnet coupling grooves 422 to which the permanent magnets 440 are coupled.

A plurality of permanent magnet coupling grooves 422 may be formed. The permanent magnet coupling grooves 422 may be formed along the circumferential direction of the rotor base plate 420. The permanent magnet coupling grooves 422 may be formed in a first surface P1, among the first surface P1 facing the stator core 320 and a second surface P2 opposite to the first surface P1. The permanent magnet coupling grooves 422 may be coupled to the permanent magnets 440 by bolts. Alternatively, the permanent magnet coupling grooves 422 may be coupled to the permanent magnets 440 by an adhesive.

When power is applied to the stator 300, the permanent magnets 440 allow the rotor 400 to rotate by a magnetic field. A plurality of permanent magnets 440 are provided. The permanent magnets 440 may be provided in a number corresponding to the permanent magnet coupling grooves 422. The permanent magnets 440 may be arranged such that N poles and S poles are alternately exposed. When the permanent magnets 440 are provided in an odd number, an adjacent pair of the plurality of permanent magnets may be arranged with the same pole; to prevent this, the permanent magnets 440 may be provided in an even number.

The cooling module 500 cools the stator 300. Specifically, one surface of the cooling module 500 may contact along a circumference of the stator 300 to cool the stator 300. The cooling module 500 may be provided between the stator 300 and the motor housing 100. The cooling module 500 includes a cooling tube 520 and a cooling plate 540.

The cooling tube 520 is arranged along the circumference of the stator 300 to cool the stator 300. The cooling tube 520 is formed as a tube through which a coolant flows, and cools the stator 300 as a low-temperature coolant flows therethrough. The cooling tube 520 is formed with a coolant inlet 522 and a coolant outlet 524 at both ends thereof. The cooling tube may be formed of a material having a high thermal conductivity. For example, the cooling tube 520 may be formed of a copper material or an aluminum material.

In order to improve cooling efficiency, the cooling tube 520 may be wound a plurality of times along the circumferential direction of the stator 300. Among the wound portions 520a, 520b, 520c, ... of the cooling tube wound a plurality of times, adjacent wound portions 520a, 520b, 520c, ... may be arranged to be spaced apart from each other. The wound portions 520a, 520b, 520c, ... may be spaced apart at equal intervals, but are not limited thereto, and the spacing distance between the wound portions 520a, 520b, 520c, ... and the spacing distance from the coil 322 will be understood as positions capable of improving the cooling efficiency.

The cooling plate 540 disperses heat of the coil 322 to the cooling tube 520. The cooling plate 540 is disposed between the coil 322 and the cooling tube 520. The cooling plate 540 may be formed to surround the stator 300 along the circumferential direction of the stator 300. For example, the cooling plate 540 may be provided in a cylindrical shape having a hollow into which the stator 300 is inserted in the axial direction. An inner side of the cooling plate 540 may contact the plurality of coils 322 and an outer side thereof may contact the cooling tube 520, so that heat may be exchanged between the coil 322 and the cooling tube 520. The cooling plate 540 may be formed of an insulating material. For example, the cooling plate 540 may be formed of alumina, silica, an epoxy material, or the like, which has insulating properties and high thermal conductivity.

However, although the cooling plate 540 has been described as contacting the plurality of coils 322, the present invention is not limited thereto, and the cooling plate 540 may exchange heat while being spaced apart from the plurality of coils 322 by a predetermined distance.

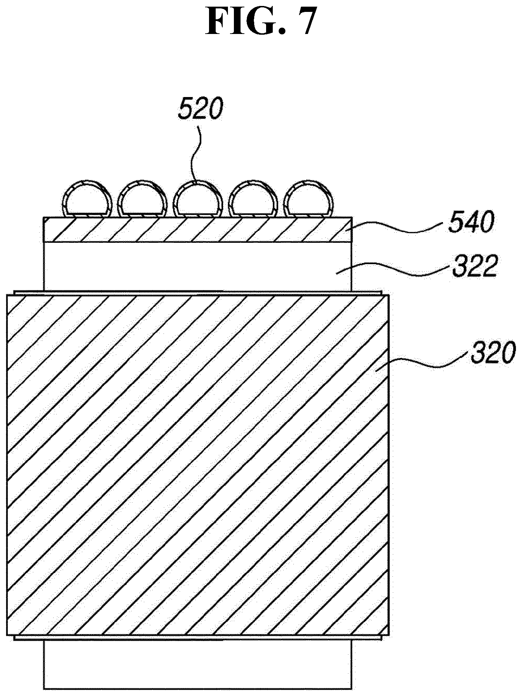

As illustrated in FIG. 7, the cooling tube 520 according to another embodiment of the present invention may be formed in a truncated circular shape having a chord in cross-section. In this case, the cooling tube 520 may be wound on the cooling plate 540 such that the flat surface defined by the chord contacts an outer surface of the cooling plate 540. Accordingly, a contact surface between the cooling tube 520 and the cooling plate 540 is increased, thereby providing an effect of improving the cooling efficiency of the coil 322.

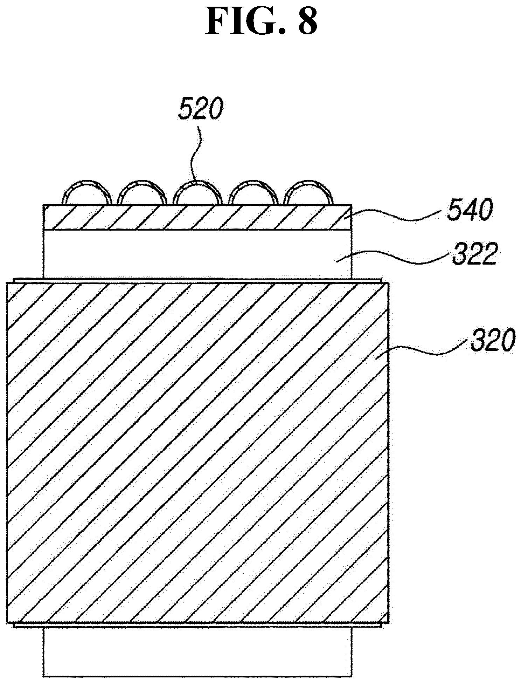

Further, as illustrated in FIG. 8, the cooling tube 520 according to another embodiment of the present invention may be formed in a semicircular shape having one side open. In this case, the open side of the cooling tube 520 may be coupled along an outer surface of the cooling plate 540 to form a space through which the coolant flows. Accordingly, the cooling tube 520 is formed integrally with the cooling plate 540, thereby providing an effect of not only improving the cooling efficiency but also reducing material costs.

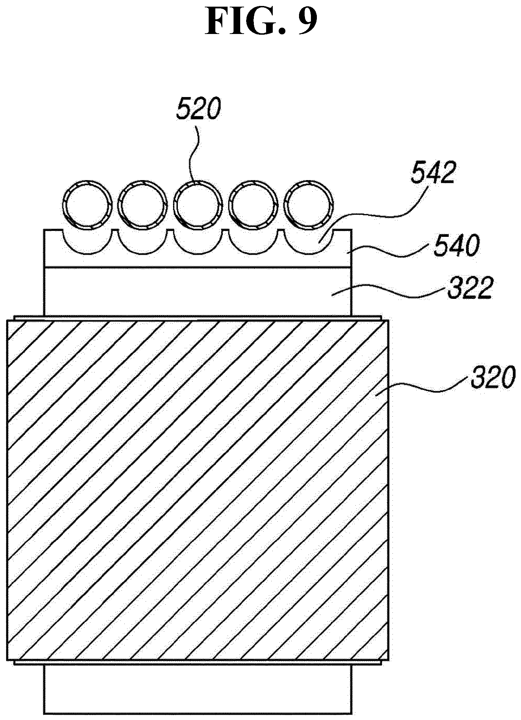

Further, as illustrated in FIG. 9, the cooling tube 520 according to another embodiment of the present invention is formed in a cylindrical shape, and the cooling plate 540 may be formed with a cooling tube insertion groove 542 corresponding to the shape of the cooling tube 520 along an outer surface thereof. The cooling tube 520 may be wound along the cooling tube insertion groove 542. Accordingly, the cooling tube 520 is formed in a cylindrical shape, so that a contact surface with the cooling plate 540 can be increased while maintaining a supply amount of the coolant flowing therein, thereby providing an effect of improving the cooling efficiency.

Although the cooling tube 520 has been described as having a cylindrical or semicircular shape in the above-described examples, the shape of the cooling tube 520 is not limited thereto, and will be understood as a shape that is easy to manufacture and capable of increasing a contact area with the cooling plate 540.

Although it has been described that, in the cooling module 500 according to an embodiment of the present invention, the cooling plate 540 is provided between the coil 322 and the cooling tube 520 to disperse heat of the coil 322 to the cooling tube 520, the cooling module 500 according to another embodiment of the present invention may be provided in a form in which an interior space is formed in a cooling plate 550 to accommodate the cooling tube 520.

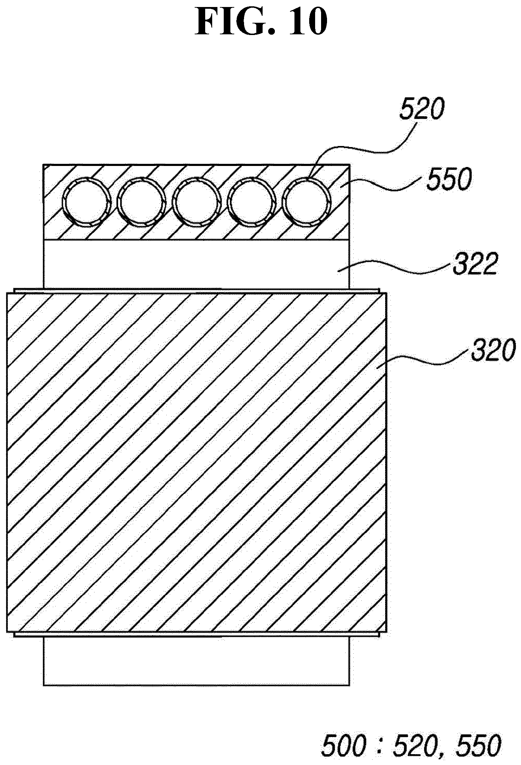

FIG. 10 is a cross-sectional view of a stator and a cooling module according to another embodiment of the present invention.

Referring to FIG. 10, the cooling module 500 includes a cooling tube 520 and a cooling plate 550.

Since the structure and function of the cooling tube 520 are the same as those of the cooling tube 520 described above, a description thereof will be omitted below.

The cooling plate 550 disperses heat of the coil 322 to the cooling tube 520. The cooling plate 550 is disposed such that one surface thereof contacts the coil 322. The cooling plate 550 may be formed to surround the stator 300 along the circumferential direction of the stator 300. For example, the cooling plate 550 may be provided in a cylindrical shape having a hollow into which the stator 300 is inserted in the axial direction. The cooling plate 550 is formed with an interior space in which the cooling tube 520 is accommodated. In this case, the cooling tube 520 may be provided to be wound a plurality of times inside the cooling plate 550. Describing a method of accommodating the cooling tube 520 in the cooling plate 550, the wound cooling tube 520 is put into a mold of a shape to be molded, and then liquid epoxy is filled and cured, whereby the cooling plate 550 accommodating the cooling tube 520 may be molded.

Accordingly, the entire area of the cooling tube 520 accommodated inside the cooling plate 550 contacts the cooling plate 550, thereby providing an effect of improving heat exchange efficiency.

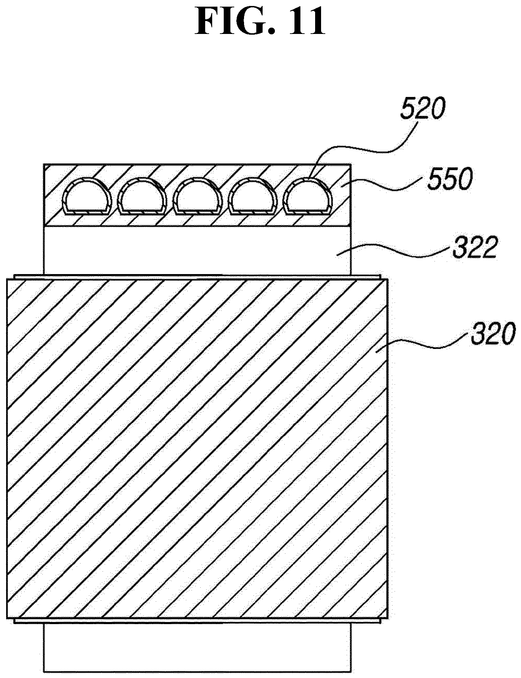

Further, as illustrated in FIG. 11, the cooling tube 520 according to another embodiment of the present invention may be formed in a truncated circular shape having a chord in cross-section. In this case, the cooling tube 520 may be accommodated inside the cooling plate 550 such that the flat surface defined by the chord is adjacent to the coil 322. Accordingly, the cross-sectional area of the cooling tube 520 is formed to be largest at a position where heat generation of the coil 322 is greatest, thereby providing an effect of improving heat exchange efficiency.

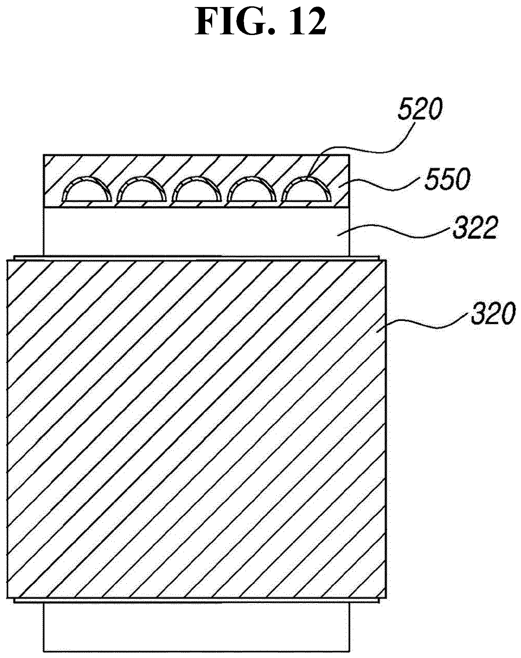

Further, as illustrated in FIG. 12, the cooling tube 520 according to another embodiment of the present invention may be formed in a semicircular shape having one side open. In a state in which the cooling tube 520 is accommodated inside the cooling plate 550, the open side may be coupled to the cooling plate 550 to form a space through which the coolant flows. In this case, the cooling tube 520 may be arranged such that the open side is adjacent to the coil 322. Accordingly, the cooling tube 520 is formed integrally with the cooling plate 550, thereby providing an effect of not only improving the cooling efficiency but also reducing material costs.

According to the above-described examples, the cooling module 500 contacts the stator 300 to cool the stator 300, so that the cooling efficiency can be improved, thereby providing an effect of efficiently controlling heat generation inside the motor.

Further, the cooling module 500 may further include a cooling pump (not shown). The cooling pump circulates the coolant through the cooling tube 520 to remove heat of the coil 322. The cooling pump accommodates the coolant therein. For example, the coolant may be provided as cooling water or a cooling gas. One side of the cooling pump is connected to the coolant inlet 522, and the other side thereof is connected to the coolant outlet 524. The cooling pump cools the coolant discharged through the coolant outlet 524 and supplies the cooled coolant to the coolant inlet 522. Accordingly, the cooling pump can supply the coolant to the cooling tube 520 by constantly maintaining the temperature of the coolant at a temperature lower than that of the heated coil 322.

Although it has been described above that all the components constituting the embodiments of the present invention are combined into one or combined to operate, the present invention is not necessarily limited to these embodiments. That is, within the scope of the object of the present invention, all of the components may be selectively combined into one or more and operate. In addition, terms such as "comprise," "constitute," or "have" described above mean that the corresponding component may be inherent unless specifically stated otherwise, and thus should be interpreted as being capable of further including other components rather than excluding other components. All terms including technical or scientific terms have the same meaning as commonly understood by those of ordinary skill in the art to which the present invention belongs, unless otherwise defined. Terms commonly used, such as those defined in dictionaries, should be interpreted as consistent with their meanings in the context of the relevant technology, and should not be interpreted in an idealized or overly formal sense unless explicitly defined in the present invention.

Furthermore, the above description is merely illustrative of the technical idea of the present invention, and those of ordinary skill in the art to which the present invention belongs will be able to make various modifications and variations without departing from the essential characteristics of the present invention. Therefore, the embodiments disclosed in the present invention are not intended to limit the technical idea of the present invention but to describe it, and the scope of the technical idea of the present invention is not limited by these embodiments. The scope of protection of the present invention should be construed by the following claims, and all technical ideas within an equivalent scope thereof should be construed as being included in the scope of rights of the present invention.

## Claims

1. An axial flux motor comprising:
a motor housing defining an internal space;
a shaft rotatably provided in the internal space;
a stator disposed to be fixed to the motor housing in the internal space, the stator including a stator core, a coil, and a stator bracket;
a rotor fixedly coupled to the shaft and disposed to face the stator in an axial direction, the rotor including a rotor base plate and a plurality of permanent magnets;
a cooling tube arranged along a circumference of the stator to cool the stator; and
a cooling plate provided between the coil and the cooling tube to disperse heat from the coil to the cooling tube.

2. The axial flux motor of claim 1, wherein the cooling tube is provided to be wound a plurality of times along a circumferential direction of the stator.

3. The axial flux motor of claim 2, wherein, in a wound state, adjacent portions of the cooling tube are arranged to be spaced apart from each other.

4. The axial flux motor of claim 1, wherein the cooling plate is formed to surround the stator along a circumferential direction of the stator.

5. The axial flux motor of claim 4, wherein the cooling tube is formed to have a cross-section of a truncated circle having a chord, and a flat surface defined by the chord is arranged to contact the cooling plate.

6. The axial flux motor of claim 4, wherein the cooling tube is formed in a semicircular shape having one side open, and the open side of the cooling tube is coupled to the cooling plate such that an interior space through which a coolant flows is formed.

7. The axial flux motor of claim 1, wherein the cooling plate has, in a surface contacting the cooling tube, a cooling tube insertion groove corresponding to an outer shape of the cooling tube.

8. An axial flux motor comprising:
a motor housing defining an internal space;
a shaft rotatably provided in the internal space;
a stator disposed to be fixed to the motor housing in the internal space, the stator including a stator core, a coil, and a stator bracket;
a rotor fixedly coupled to the shaft and disposed to face the stator in an axial direction, the rotor including a rotor base plate and a plurality of permanent magnets;
a cooling tube wound along a circumferential direction of the stator to cool the stator; and
a cooling plate having an interior space formed therein to accommodate the cooling tube, and provided such that one surface thereof contacts the stator to disperse heat.

9. The axial flux motor of claim 8, wherein the cooling tube is provided to be wound a plurality of times along a circumferential direction of the stator.

10. The axial flux motor of claim 8, wherein, in a wound state, adjacent portions of the cooling tube are arranged to be spaced apart from each other.

11. The axial flux motor of claim 8, wherein the cooling tube is formed to have a cross-section of a truncated circle having a chord, and a flat surface defined by the chord is arranged to contact the cooling plate.

12. The axial flux motor of claim 8, wherein the cooling tube is formed in a semicircular shape having one side open, and the open side of the cooling tube is coupled to the cooling plate such that an interior space through which a coolant flows is formed.
